# EUROPEAN PATENT SPECIFICATION

(11) **EP 2 903 227 B1**
(45) Date of publication and mention of the grant of the patent: **17.10.2018**
(21) Application number: 14153322.4
(22) Date of filing: 30.01.2014
(51) Int. Cl.: H04L 25/02, H04B 7/06

(54) **Method for operating a base station in a wireless radio network**
Verfahren zum Betreiben einer Basisstation in einem drahtlosen Funknetz
Procédé pour faire fonctionner une station de base dans un réseau radio sans fil

(43) Date of publication of application: 05.08.2015
(73) Proprietor: Sony Corporation, Tokyo 108-0075 (JP)
(72) Inventor: Larsson, Bo, 217 64 Malmö (SE); Ying, Zhinong, 226 48 Lund (SE); Bengtsson, Erik, 241 35 Eslöv (SE)
(74) Representative: Banzer, Hans-Jörg

(56) References cited:
- WO-A2-2011/068995
- US-A1- 2013 095 819

## Description

### FIELD OF THE INVENTION

The present invention relates to a method for operating a base station in a wireless radio network. Especially, the present invention relates to a method for operating a base station comprising a plurality of antennas for transmitting radio frequency signals according to a so-called multiple-input and multiple-output (MIMO) technology. The present invention relates furthermore to a base station which implements the method, and a user equipment which is configured to be used in connection with the base station.

### BACKGROUND OF THE INVENTION

For increasing data transmission performance and reliability, the so-called multiple input and multiple-output technology (MIMO) may be used in wireless radio frequency telecommunications for transmitting information between a base station and a user equipment. The MIMO technology relates to the use of multiple send and receive antennas for a wireless communication at for example a base station or a user equipment. The MIMO technology forms the basis for coding methods which use the temporal as well as the spatial dimension for transmitting information and enables therefore a space and time coding. Thus, a quality and data rate of the wireless communication may be increased.

In this context, WO 2011/068995 A2 discloses a sounding reference signal enhancement method for wireless communication according to the preamble of claim 1. The method includes determining whether a wireless device desires dynamic sounding reference signal resources and providing, based on the determination, a dynamic sounding reference signal resource allocation to the wireless device. In some designs, a network node may initiate sounding reference signal transmission resource allocation by monitoring buffer fullness of transmission buffers allocated to a particular user equipment. In some other designs, the network node may monitor channel conditions, such as error rates and signal-to-noise ratio, to monitor whether additional sounding reference signal resource allocations to a particular user equipment need to be assigned.

US 2013/0095819 A1 relates to a method for performing neighbour cell measurements in wireless networks. Various aspects in connection with reducing power consumption caused by measuring signals from neighbouring cells are described. For example, a device can select a type of measurement to utilise in measuring neighbouring cells based on a determined change in location of the device. Thus, where the change in location of the device results in a similar radio communications environment, measurements that utilise radio-frequency calibration, such as signal-to-noise ratio, carrier-to-interference-and-noise-ratio etc. may not be needed.

When a large number of user equipments is arranged within a cell served by a base station having a plurality of antennas and transmitting information according to the above-described MIMO technology, such an arrangement is called a massive MIMO system. In the massive MIMO system, a configuration of individual antenna transceivers of the base station may vary depending on a location of each of the user equipments and transmission conditions in an environment of the base station and the user equipment.

The massive MIMO system may be used in connection with a time division duplex (TDD) system in which a transmission of an information stream between the base station and a user equipment is split up in time slots. Different time slots for uplink (UL) data communications and downlink (DL) data communications may be provided for communicating information from the user equipment up to the base station and for communicating information from the base station down to the user equipment. In the massive MIMO system, there is a need for an additional time slot which may be called "header" for transmitting a training signal or a training sequence from the user equipment to the base station. Based on the received training signal, the base station may configure the transceivers of its antenna array according to spatial and environmental conditions. Thus, high antenna gain for the payload transmitted in the following time slots can be achieved. The payload may be transmitted in a number of uplink and downlink time slots. However, when the user equipment is moving, the channel quality may degrade due to a change of the spatial arrangement of the base station and the user equipment.

Typically, massive MIMO systems are expected in buildings such as offices, shopping malls and so on. In this environment a large number of user equipments is expected. The mobility of the user equipment or a changing spatial arrangement of the base station and the user equipment may demand that channel training sequences are sent frequently in order to keep up with the aging or erosion of the antenna configurations of the MIMO system. The faster a user equipment is moving, the more frequent a training sequence needs to be transmitted from the user equipment to the base station. Typically, the base stations in such a massive MIMO system are configured in a way to allow a maximum speed or spatial arrangement change of the user equipments. However, this may have an impact on the system throughput as the frequently sent training sequences may occupy a valuable and significant part of the data communication channel. Furthermore, in a typical MIMO system, the training sequences are transmitted from all user equipments within the cell and possibly also neighboring cells in a dedicated time slot. The training sequences need to be orthogonal in order for the base station to identify the configuration parameters for the plurality of antennas for each of the individual user equipments. Orthogonality may be achieved by using time division multiple access (TDMA), code division multiple access (CDMA) or frequency division multiple access (FDMA) technologies or a combination thereof. In a large cell including a large number of user equipments, the header for transmitting the training sequences will be very large.

Therefore, there is a need to improve the above-described MIMO technology, especially to enhance the ratio between payload information and header information to increase data throughput.

### SUMMARY OF THE INVENTION

According to the present invention, this object is achieved by a method for operating a base station in a wireless network as defined in claim 1, and a base station for a wireless radio network as defined in claim 13. The dependent claims define preferred and advantageous embodiments of the invention.

According to an aspect of the present invention, a method for operating a base station in a wireless radio network is provided. The base station comprises a plurality of antennas for transmitting radio frequency signals between the base station and a user equipment. The terms "transmit", "transmitting" etc. as used in the present description may relate to receiving information from the user equipment at the base station as well as sending information from the base station to the user equipment. According to the method, a transmission slot is provided, in which a training signal sent from the user equipment is received at each antenna of a subset of the plurality of antennas. In case a plurality of user equipments are present, for each user equipment a corresponding transmission slot may be provided, and within each corresponding transmission slot, at each antenna of the subset of the plurality of antennas the corresponding training signal sent from the corresponding user equipment may be received. Therefore, the training signal may be received simultaneously at each antenna of the subset of the plurality of antennas during the provided transmission slot. The training signals need to be orthogonal in order for the base station to identify the configuration parameters for the plurality of antennas for each of the individual user equipments. Orthogonality may be achieved by using time division multiple access (TDMA), code division multiple access (CDMA) or frequency division multiple access (FDMA) technologies or a combination thereof. When using time division multiple access (TDMA) for transmitting trainings signals, each training signal may be transmitted in a separate time slot. Therefore, in a TDMA system, the transmission slot corresponds to a time slot. For each antenna of the subset, a corresponding configuration parameter is determined based on the training signal received at the corresponding antenna, and payload information blocks to be transmitted between the base station and the user equipment are transmitted using the determined configuration parameters for the antennas. The subset of the plurality of antennas may comprise those antennas of the plurality of antennas which are arranged to receive the training signal from the user equipment. For example, if the antennas of the base station are arranged cylindrically, only a subset of the antennas may receive the training signal sent from the user equipment, whereas some other antennas may not receive the training signal. Furthermore, if a very large antenna array is used, only a part or a subset of the array of antennas may be used for a specific user equipment. However, the subset may also comprise all antennas of the plurality of antennas provided at the base station. As an example, the base station may comprise for example an antenna array of thirty to one hundred or even more antennas arranged for example in a matrix or cylindrically. Likewise, the user equipment may comprise one or more antennas, for example one to four antennas. Due to the configuration parameters determined for each antenna of the subset of the plurality of antennas, the base station may be enabled to communicate with the user equipment according to the above-described MIMO technology. According to the method, a deterioration parameter is determined which indicates a deterioration or degradation of a transmission between the base station and the user equipment due to a change in the transmission which would require an adaption of the configuration parameters. A deterioration of a transmission due to a change in the transmission requiring adaption of the configuration parameters may comprise for example a deterioration due to a change of a spatial arrangement of the base station and the user equipment, or due to a change in an environment of the base station or the user equipment resulting in a change of a propagation path of the transmission between the base station and the user equipment. Based on the deterioration parameter, a timing parameter is determined for controlling when a further next or following transmission slot is to be provided for receiving at each antenna of the subset of the plurality of antennas a next training signal sent from the user equipment.

For example, in a typical massive MIMO system a lot of user equipments may be arranged within a cell served by the base station. However, especially in the scenario of a massive MIMO system in buildings such as offices or shopping malls, a lot of the user equipments may be stationary, for example desktop computers, cash registers, supervision cameras and so on. Such stationary user equipments may have the same or even a higher need for bandwidth as mobile user equipments like mobile phones, especially smart phones, tablet PCs and so on. However, adaption of the configuration parameters for transmitting data between the base station and the stationary user equipments is required less frequently than an update of configuration parameters used for data transmissions between the base station and user equipments which are changing their position with the respect to the base station. Therefore, according to the above-described method, a timing for controlling when a further transmission slot is to be provided for receiving a next training signal from each user equipment is determined individually for each user equipment based on a deterioration parameter indicating a deterioration of a transmission between the base station and the corresponding user equipment. For example, a fast moving user equipment may transmit training signals more frequently than slow moving user equipments or stationary user equipments. A fast moving user equipment may transmit a training signal each frame, while stationary or slow moving user equipments may transmit training signals less often, for example every other frame or every third frame. Further, also user equipments in idle mode having no active payload communication may transmit training signals less often, for example every other frame or even less often, in order to verify that they are still in the coverage of the base station. The determined timing or allocation scheme may need to provide synchronization between the user equipments and the base station. For example, the base station may allocate an appropriate timing for each user equipment taking into account the individual mobility of each of the user equipments. This may enable to set up a system with a smaller header in each frame, or it may allow more user equipments to be connected to the same base station. This implies that the cells payload capacity may be improved compared to a system in which a transmission slot is allocated for each user equipment in each frame independent of the mobility. Furthermore, due to adapting the timing for providing the transmission slots for receiving training signals, the header size of each frame may be allocated dynamically to reflect the collective mobility of the user equipments attached to the base station. This may increase system performance, since the header may dynamically become smaller when the number of stationary user equipments grows. Therefore, the relative size of the header may decrease versus the payload. Vice versa, the header may dynamically become larger when the number of moving user equipments is growing. This information may be communicated and synchronized with neighboring cells.

The deterioration parameter is determined by determining a relative movement between the base station and the user equipment. For example, determining the deterioration parameter comprises determining a movement of the base station and/or a movement of the user equipment. A change of a special arrangement of the user equipment with respect to the base station may require an update of the configuration parameters of the antennas for ensuring a high performance data communication. In case the base station as well as the user equipment are moving, there may be no relative movement between them, for example when the base station is arranged in a train and the user equipment is a mobile phone or a mobile computer located stationary within the same train. In this case, although both, the base station and the user equipment, are moving, a deterioration of the communication between them is not expected and therefore the
configuration parameters are not needed to be updated very frequently and therefore a transmission slot for receiving training signals from the user equipment may be provided less frequently. However, when there is a fast relative movement determined between the base station and the user equipment, for example when the base station is arranged stationary and the user equipment is moving along in a vehicle, a significant deterioration is expected when the user equipment is moving out of the focus of the antennas of the base station defined by the configuration parameters. Therefore, transmission slots for receiving training signals from the user equipment have to be provided more frequently for updating the configuration parameters.

For example, the deterioration parameter may be determined by determining a spatial information of at least one of the base station and the user equipment. The spatial information of the base station may be determined by determining a speed with which the base station is moving, an acceleration with which the base station is accelerated or a direction of movement of the base station, or by determining a location of the base station. The location of the base station may be a predefined stationary position of the base station or may be determined for example based on a global positioning system like GPS. The spatial information of the user equipment may be determined by determining a speed with which the user equipment is moving, an acceleration with which the user equipment is currently accelerated, a direction in which the user equipment is currently moved or by determining a current location of the user equipment. The current location of the user equipment may be determined from a predefined stationary position defined for the user equipment or based on a current global position, determined e.g. by a global positioning system like GPS. For determining the current position of the user equipment, sensors of the user equipment like an accelerometer and/or a gyrometer may be used.

According to another embodiment, the deterioration parameter may be determined by a bit error rate of a transmission between the base station and the user equipment while data is communicated between the base station and the user equipment using the determined configuration parameters for the antennas. Determining the bit error rate may be advantageous for example in case there is essentially no relative movement between the base station and the user equipment, but there is a change in the environment influencing the transmission between the base station and the user equipment. For example, when the base station and the user equipment are arranged stationary and have a direct line of sight at the beginning of a communication, the configuration parameters may be determined and configured correspondingly. However, an object, for example a vehicle, may be moving such that it obstructs at least partially the direct line of sight between the base station and the user equipment. In this case, the bit error rate may increase and based on this information, the timing for providing transmission slots for receiving further training signals may be adapted accordingly to maintain a high quality data communication between the base station and the user equipment. Therefore, especially considering the spatial information concerning the base station and the user equipment in combination with the bit error rate enables determining and estimating a deterioration of the transmission between the base station and the user equipment very efficiently such that the timing parameter for controlling when a further transmission slot is to be provided for receiving a next training signal may be determined appropriately. Additionally or as an alternative, the deterioration parameter may be determined by a noise figure and/or a signal level of the transmission between the base station and the user equipment. Furthermore, additionally or as an alternative, the deterioration parameter may be determined by detecting a change in a so-called footprint matrix of the user equipment. The footprint matrix relates for example to a characteristic pattern in the antenna configuration parameters formed by the training signal from user equipment, when the configuration parameters are for example arranged in a matrix corresponding to a matrix arrangement of the antennas. When the user equipment is moving, the configuration parameter pattern may also be moving from frame to frame. This change or movement may be used to determine the deterioration parameter.
According to another embodiment, based on the deterioration parameter, a next point in time, at which the further transmission slot for receiving the next training signal is to be provided, is determined as the timing parameter. For example, based on the deterioration parameter, for a certain user equipment it may be determined that it is sufficient to provide a transmission slot for receiving the next training signal in a few hundred milliseconds, for example in 700 milliseconds. Thus, an appropriate frame may be selected and in this frame a corresponding transmission slot for receiving the next training signal may be provided. Thus, the transmission slots for receiving the training signals may be used very efficiently.

According to another embodiment, based on the deterioration parameter, a training sequence rate value may be determined which controls a rate at which further transmission slots are to be provided for receiving at each antenna of the subset of the plurality of antennas next training signals from the user equipment. For example, when a very slow relative movement between a user equipment and a base station is determined, the training sequence rate value may be determined such that transmission slots for receiving training signals from this certain user equipment are provided in every other frame or in every fifth frame. However, when a fast relative movement between the user equipment and the base station is determined or the bit error rate of the transmission between the base station and the user equipment is varying significantly, the training sequence rate value may be determined such that a corresponding transmission slot for receiving the training signals from this user equipment is provided in every frame. Therefore, an efficient usage of the transmission slots for the training signals may be ensured and thus the amount of overhead for receiving training signals can be reduced and the payload performance may be increased.

According to another embodiment, the configuration parameter determined for each antenna of the subset of the plurality of antennas of the base station may comprise for example an amplitude information, a phase information, a parameter pair comprising an amplitude information and an associated phase information, a plurality of these parameters, or a signal intensity information of a signal intensity received at the corresponding antenna during receiving the training signal. However, the above-listed types of configuration parameters are only examples and the configuration parameters may comprise other or additional information for configuring the antennas of the base station to enable a data transmission according to the above-described MIMO transmission scheme. Furthermore, the phase and the amplitude information may be used directly to determine the configuration parameter for receiving uplink payload information from the user equipment, as the training sequence has been sent in the same uplink direction. However, the configuration parameter for sending downlink payload information blocks to the user equipment may be determined based on a Hermitian transpose of the configuration parameter for receiving uplink payload information blocks. For example, if two uplink signal beams from the user equipment are received at the base station with different delay (phase), for sending downlink beams the phases need to be reversed as the beam with the shorter path comes in first and both beams need to be aligned at the user equipment in the downlink direction.

According to another embodiment, the plurality of antennas of the base station is configured for transmitting radio frequency signals between the base station and a plurality of user equipments. For each user equipment of the plurality of user equipments a corresponding transmission slot is provided for receiving at each antenna of a subset of the plurality of antennas a training signal sent from the corresponding user equipment. The training signals need to be orthogonal in order for the base station to identify the configuration parameters for the plurality of antennas for each of the individual user equipments. Orthogonality may be achieved by using time division multiple access (TDMA), code division multiple access (CDMA) or frequency division multiple access (FDMA) technologies or a combination thereof. For each antenna of the subset a corresponding configuration parameter is determined based on the training signal received at the corresponding antenna. Payload information blocks to be transmitted between the base station and the corresponding user equipment are transmitted using the determined corresponding configuration parameters for the antennas. Furthermore, for each user equipment a corresponding deterioration parameter indicating a deterioration of a transmission between the base station and the corresponding user equipment due to a change in the transmission and requiring adaption of the configuration parameters is determined. Based on the corresponding deterioration parameter, for each user equipment a corresponding timing parameter is determined for controlling when a further transmission slot is to be provided for receiving at each antenna of the subset of the plurality of antennas a next training signal sent from the corresponding user equipment. By adapting the timing for providing the training signal transmission slots for each user equipment individually, the header space in each frame containing the transmission slots for the training signals and the payload information blocks may be used efficiently. Furthermore, the header size may be adapted accordingly and therefore the available bandwidth may be used more efficiently.

According to another aspect of the present invention, a base station for a wireless radio network is provided which comprises a plurality of antennas for transmitting radio frequency signals between the base station and a user equipment, and a processing device. The processing device is configured to provide a transmission slot for receiving at each antenna of a subset of the plurality of antennas a training signal sent from the user equipment. The training signals need to be orthogonal in order for the base station to identify the configuration parameters for the plurality of antennas for each of the individual user equipments. Orthogonality may be achieved by using time division multiple access (TDMA), code division multiple access (CDMA) or frequency division multiple access (FDMA) technologies or a combination thereof. For each antenna of the subset a corresponding configuration parameter is determined based on the training signal received at the corresponding antenna. Then, payload information blocks to be transmitted between the base station and the user equipment may be transmitted using the determined configuration parameters for the antennas. The configuration parameters for the antennas may be different for receiving payload information blocks and for sending information blocks. However, the configuration parameter for an antenna for sending as well as a configuration parameter for the antenna for receiving may be determined based on the training signal. The processing device is furthermore configured to determine a deterioration parameter indicating a deterioration of a transmission between the base station and the user equipment due to a change in the transmission. Especially, the processing device is configured to determine a deterioration which requires an adaption of the configuration parameters to remedy the deterioration. Based on the deterioration parameter, the processing device determines a timing parameter for controlling when a further transmission slot is to be provided for receiving at each antenna of the subset of the plurality of antennas a next training signal from the user equipment. In other words, the processing device is configured to determine if a more frequent transmission of training signals is needed to maintain the configuration parameters of the antennas in the above-described MIMO system updated, or if a less frequent transmission of training parameters and update of the configuration parameters is sufficient. Therefore, an amount of overhead data to be transmitted may be reduced and thus the provided bandwidth may be used more efficiently for payload information.

According to an embodiment, the base station is configured to perform the embodiments of the above-described method and comprises therefore the advantages describes above.

According to another aspect of the present invention, a user equipment for a wireless radio network is provided. The user equipment is configured for transmission of radio frequency signals between the user equipment and the base station described above. Therefore, the user equipment supports the MIMO technology described above and comprises therefore the above-described advantages.

Although specific features described in the above summary and the following detailed description are described in connection with specific embodiments and aspects of the present invention, it should be understood that the features of the exemplary embodiments and aspects may be combined with each other unless specifically noted otherwise.

### BRIEF DESCRIPTION OF THE DRAWINGS

The present invention will be described in more detail with reference to the accompanying drawings.
Fig. 1 shows schematically a base station and user equipments according to embodiments of the present invention.
Fig. 2 shows a flow chart comprising method steps for adapting a timing for controlling training signal time slots according to an embodiment of the present invention.
Fig. 3 shows an assignment of time slots for transmitting training signals according to an embodiment of the present invention.

### DETAILED DESCRIPTION OF PREFERRED EMBODIMENTS

In the following, exemplary embodiments of the present invention will be described in more detail. It is to be understood that the features of the various exemplary embodiments described herein may be combined with each other unless specifically noted otherwise. Same reference signs in various drawings refer to similar of identical components. Any coupling between components or devices shown in the figures may be a direct or an indirect coupling unless specifically noted otherwise.

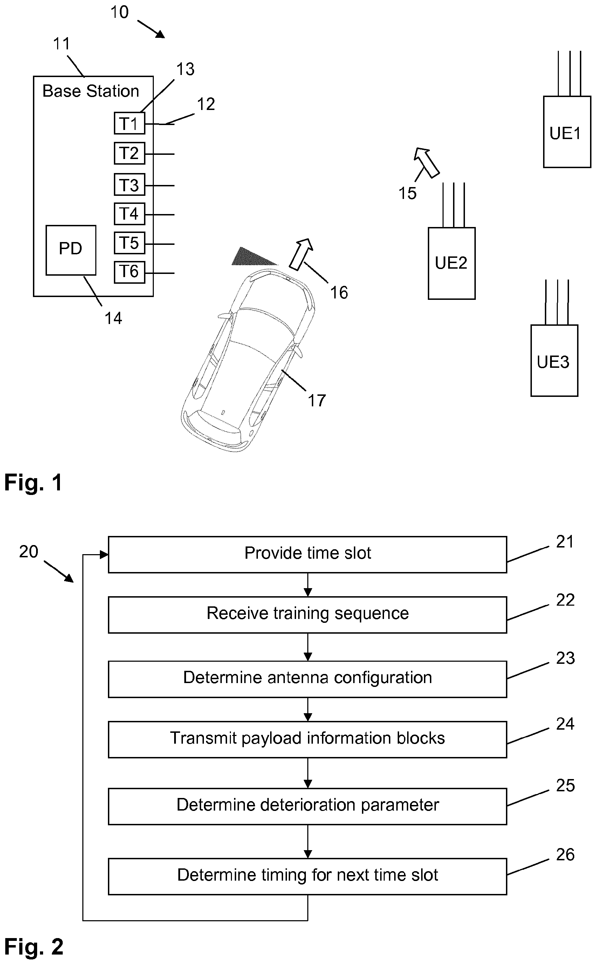

Fig. 1 shows three user equipments UE1, UE2 and UE3 arranged in an environment 10 of a base station 11. The base station 11 comprises a plurality of antennas 12 and associated transceivers 13. In Fig. 1 only six antennas 12 and six transceivers 13 are shown for clarity reasons. However, these are only exemplary numbers and the base station 11 may comprise for example an array of 30 to 100 or even more antennas and associated transceivers arranged for example in a matrix or cylindrically. Likewise, the user equipments UE1, UE2 and UE3 may comprise each one or more antennas, for example, each user equipment may comprise one to four antennas or three antennas as shown in Fig. 1. The base station 11 comprises furthermore a processing device (PD) 14 coupled to the transceivers 13 and adapted to configure the transceivers 13 for transmitting radio frequency signals between the base station 11 and the user equipments UE1, UE2 and UE3. The multiple antennas 12 and transceivers 13 of the base station 11 may be used and configured such that the above-described multiple-input and multiple-output (MIMO) technology may be utilized for transmissions between the base station 11 and the user equipments UE1, UE2 and UE3. The signal processing according the MIMO technology may be performed in the analog or digital domain or a combination thereof. Therefore, for example, a part of the transceiver functionality may be implemented digitally, for example in a signal processor or in the processing device, and the antennas 12 and the remaining parts of the transceivers 13 may be passive components.

For determining configuration parameter sets for the transceivers 13 of the base station 11 which provide a high quality transmission taking into account spatial information of the user equipments UE1, UE2 and UE3 with respect to the base station, a training signal or a training sequence of radio frequency signals may be transmitted from each corresponding user equipment UE1, UE2 or UE3 to the base station. Based on the received training signal, corresponding configuration parameters for the transceivers 13 may be determined in the base station 11. However, when one of the user equipments is moving, for example the user equipment UE2 as indicated by arrow 15 in Fig. 1, the transmission quality will degrade unless the corresponding configuration parameters are updated for the new position. Furthermore, even when the user equipment is not moving, as for example the user equipments UE1 and UE3 in Fig. 1, due to changes in the environment, as for example indicated in Fig. 1 by a vehicle 17 moving in the direction indicated by arrow 16, the transmission quality may degrade unless the corresponding configuration parameters are updated for the new environment. An update may be performed by transmitting a further training signal and determining updated configuration parameters based on the training signals received at the base station 11. However, this limits the speed with which the user equipments are allowed to move or with which environmental changes are allowed to take place without degrading transmission performance. Reducing the interval between emitting the training signals from the user equipments UE1, UE2 and UE3 to the base station 11 may reduce overall system performance due to an increasing amount of data for the training signals. Therefore, less time slots, so-called "pilot channels", are provided for each transmission block or frame than user equipments are arranged within a cell served by the base station. Then, fast moving user equipments or user equipments in a changing environment, may use a time slot in each frame, while stationary or slow moving user equipments may use time slots less often. The allocation scheme needs to provide synchronization between the user equipments and the base station. For example, the base station allocates an appropriate frequency for the time slots to each user equipment. By taking the mobility of the user equipments and the environment into account, when allocating the time slots, the amount of header information may be reduced per frame. Therefore, the header size may be reduced and the cell's payload capacity may be improved compared to a system where a training signal time slot is allocated for each user equipment in each frame.

Fig. 2 shows the above-summarized method in more detail. The method 20 shown in Fig. 2 comprises method steps 21 to 26. In step 21 a time slot is provided for receiving at each antenna 12 of the base station 11 a training signal sent from each of the user equipments UE1, UE2 and UE3 (step 22). In step 23 for each antenna a corresponding configuration parameter is determined based on the training signal received at the corresponding antenna 12. In step 24 payload information blocks are transmitted between the base station and the user equipment using the determined configuration parameters for the antennas 12. In step 25 a deterioration parameter of a transmission between the base station and each of the user equipments UE1, UE2 and UE3 is determined. The deterioration parameter may be determined based on spatial information of the base station and each of the user equipments. For example, a relative movement between the base station and each of the user equipments may be determined. The spatial information may be derived from inherent configuration parameters indicating for example a stationary position of the base station or the user equipment, or may be determined based on for example geographic information of a global positioning system. The spatial information may comprise furthermore a location, a speed, an acceleration and a moving direction. The corresponding spatial information of the user equipments UE1, UE2 and UE3 may be transmitted to the base station in corresponding information protocol data units. Based on the spatial information of the base station and each of the user equipments UE1, UE2 and UE3, the base station may determine if a deterioration of the transmission between the base station and the corresponding user equipment may occur due to a position change and an adaption of the configuration parameters of the antennas 12 is required to compensate this. Furthermore, for taking into account environmental changes like the moving vehicle 17 in Fig. 1, the base station may additionally monitor a bit error rate of each transmission to determine if an adaption of the configuration parameters of the antennas 12 is required to maintain a high quality data transmission. Furthermore, the deterioration parameter may be determined by a noise figure or a signal level of the transmission between the base station and the user equipment. Additionally or as an alternative, the deterioration parameter may be determined by detecting a change from frame to frame in a footprint matrix of the user equipment, which is a characteristic pattern in the antenna configuration parameters formed by the training signal from user equipment. Based on this deterioration parameters determined or estimated by the base station 11, for each user equipment UE1, UE2 and UE3 a timing for a further time slot or a time slot rate for receiving a next training signal is determined in step 26. Therefore, for slow moving or stationary user equipments less time slots for receiving training signals are provided than for user equipments having a high mobility or user equipments arranged with respect to the base station in a rapidly changing environment.

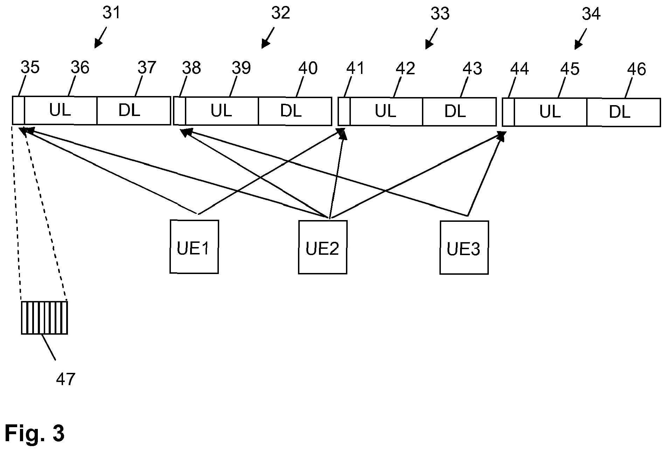

Fig. 3 shows providing or allocating the time slots for receiving the training signals in more detail. Fig. 3 shows a plurality of transmission frames 31 to 34. Each transmission frame comprises a header 35, 38, 41 and 44, respectively, and a payload information block comprising an uplink UL payload information block 36, 39, 42 and 45, respectively, and a downlink DL payload information block 37, 40, 43 and 46, respectively. As shown in more detail with respect to the header 35, each header comprises a plurality of time slots 47 for receiving training signals from the user equipments. In the example shown in Fig. 3, the header comprises eight time slots 47. In the example shown in Fig. 3, the user equipments UE1 and UE3 are stationary, whereas the user equipment UE2 is moving. Therefore, the moving user equipment UE2 transmits the training sequence in every frame as indicated by the arrows, whereas the stationary user equipments UE1 and UE3 transmit their training sequences in every other frame only. In detail, user equipment UE1 transmits its training sequences in transmission frames 31 and 33, and user equipment UE3 transmits its training sequences in transmission frames 32 and 34. Therefore, the header size may be reduced and more payload information may be transmitted. Furthermore, the adaption of the configuration parameters within the base station 11 may be performed for the user equipments UE1 and UE3 less frequently which may reduce also the calculation intensity within the base station 11.

As described above, the training signals need to be orthogonal in order for the base station to identify the configuration parameters for the plurality of antennas for each of the individual user equipments. In the above described exemplary embodiments, the training signals are separated by using different time slots, in a time division multiple access (TDMA) technology. However, orthogonality may be achieved by other orthogonal access technologies like code division multiple access (CDMA) or frequency division multiple access (FDMA) technologies or a combination thereof.

## Claims

1. A method for operating a base station in a wireless radio network, the base station (11) comprising a plurality of antennas (12) for transmitting radio frequency signals between the base station (11) and a user equipment (UE1, UE2, UE3), the method comprising:
- providing a transmission slot (47) for receiving at each antenna (12) of a subset of the plurality of antennas (12) a training signal sent from the user equipment (UE1, UE2, UE3), wherein for each antenna (12) of the subset a corresponding configuration parameter is determined based on the training signal received at the corresponding antenna (12), and wherein payload information blocks (36, 37) to be transmitted between the base station (11) and the user equipment (UE1, UE2, UE3) are transmitted using the determined configuration parameters for the antennas (12),
- determining a deterioration parameter indicating a deterioration of a transmission between the base station (11) and the user equipment (UE1, UE2, UE3) due to a change in the transmission requiring adaption of the configuration parameters, and
- determining, based on the deterioration parameter, a timing parameter for controlling when a further transmission slot (47) is to be provided for receiving at each antenna (12) of the subset of the plurality of antennas (12) a next training signal sent from the user equipment (UE1, UE2, UE3),
**characterized in that** determining the deterioration parameter based on a determination of a relative movement between the base station (11) and the user equipment (UE1, UE2, UE3).

2. The method according to claim 1, wherein determining the deterioration parameter comprises determining a spatial information of the base station (11).

3. The method according to claim 2, wherein determining the spatial information of the base station (11) comprises at least one of a group consisting of:
- determining a location of the base station (11),
- determining a speed with which the base station (11) is moving,
- determining an acceleration with which the base station (11) is accelerated, and
- determining a direction of a movement of the base station (11).

4. The method according to claim 3, wherein determining the location of the base station (11) comprises at least one of a group of:
- determining a stationary position defined for the base station (11), and
- determining a current position of the base station (11).

5. The method according to any one of the preceding claims, wherein determining the deterioration parameter comprises determining a spatial information of the user equipment (UE1, UE2, UE3).

6. The method according to claim 5, wherein determining the spatial information of the user equipment (UE1, UE2, UE3) comprises at least one of a group consisting of:
- determining a location of the user equipment (UE1, UE2, UE3),
- determining a speed with which the user equipment (UE1, UE2, UE3) is moving,
- determining an acceleration with which the user equipment (UE1, UE2, UE3) is accelerated, and
- determining a direction of a movement of the user equipment (UE1, UE2, UE3).

7. The method according to claim 6, wherein determining the location of the user equipment (UE1, UE2, UE3) comprises at least one of a group of:
- determining a stationary position defined for the user equipment (UE1, UE2, UE3), and
- determining a current position of the user equipment (UE1, UE2, UE3).

8. The method according to any one of the preceding claims, wherein determining the deterioration parameter comprises at least one of a group consisting of:
- determining a bit error rate of a transmission between the base station (11) and the user equipment (UE1, UE2, UE3) using the determined configuration parameters for the antennas (12),
- determining a noise figure a transmission between the base station (11) and the user equipment (UE1, UE2, UE3) using the determined configuration parameters for the antennas (12),
- determining a signal level of a transmission between the base station (11) and the user equipment (UE1, UE2, UE3) using the determined configuration parameters for the antennas (12), and
- determining a change in a footprint matrix of the user equipment (UE1, UE2, UE3) in the determined configuration parameters for the antennas (12).

9. The method according to any one of the preceding claims, wherein determining the timing parameter comprises determining, based on the deterioration parameter, a next point in time at which the further transmission slot for receiving the next training signal is to be provided.

10. The method according to any one of the preceding claims, wherein determining the timing parameter comprises determining, based on the deterioration parameter, a training sequence rate value controlling a rate at which further transmission slots are to be provided for receiving at each antenna (12) of the subset of the plurality of antennas (12) next training signals sent from the user equipment (UE1, UE2, UE3).

11. The method according to any one of the preceding claims, wherein the configuration parameter comprises at least one of a group consisting of:
- an amplitude information,
- a phase information,
- a parameter pair comprising an amplitude information and an associated phase information,
- a plurality of the parameter pairs, and
- a signal intensity.

12. The method according to any one of the preceding claims, wherein the plurality of antennas (12) of the base station (11) is configured for transmitting radio frequency signals between the base station (11) and a plurality of user equipments (UE1, UE2, UE3), the method comprising:
- providing for each user equipment (UE1, UE2, UE3) of the plurality of user equipments (UE1, UE2, UE3) a corresponding transmission slot (47) for receiving at each antenna (12) of a subset of the plurality of antennas (12) a training signal sent from the corresponding user equipment (UE1, UE2, UE3), wherein for each antenna (12) of the subset a corresponding configuration parameter is determined based on the training signal received at the corresponding antenna (12), and wherein payload information blocks (36, 37) to be transmitted between the base station (11) and the corresponding user equipment (UE1, UE2, UE3) are transmitted using the determined corresponding configuration parameters for the antennas (12),
- determining for each user equipment (UE1, UE2, UE3) a corresponding deterioration parameter indicating a deterioration of a transmission between the base station (11) and the corresponding user equipment (UE1, UE2, UE3) due to a change in the transmission requiring adaption of the configuration parameters, and
- determining for each user equipment (UE1, UE2, UE3), based on the corresponding deterioration parameter, a corresponding timing parameter for controlling when a further transmission slot (47) is to be provided for receiving at each antenna (12) of the subset of the plurality of antennas (12) a next training signal sent from the corresponding user equipment (UE1, UE2, UE3).

13. A base station for a wireless radio network, comprising:
- a plurality of antennas (12) for transmitting radio frequency signals between the base station (11) and a user equipment (UE1, UE2, UE3), and
- a processing device (14) configured to
provide a transmission slot (47) for receiving at each antenna (12) of a subset of the plurality of antennas (12) a training signal sent from the user equipment (UE1, UE2, UE3), wherein for each antenna (12) of the subset a corresponding configuration parameter is determined based on the training signal received at the corresponding antenna (12), and wherein payload information blocks (36, 37) to be transmitted between the base station (11) and the user equipment (UE1, UE2, UE3) are transmitted using the determined configuration parameters for the antennas (12),
determine a deterioration parameter indicating a deterioration of a transmission between the base station (11) and the user equipment (UE1, UE2, UE3) due to a change in the transmission requiring adaption of the configuration parameters, and determine, based on the deterioration parameter, a timing parameter for controlling when a further transmission slot (47) is to be provided for receiving at each antenna (12) of the subset of the plurality of antennas (12) a next training signal sent from the user equipment (UE1, UE2, UE3),
**characterized in that** determining the deterioration parameter based on a determination of a relative movement between the base station (11) and the user equipment (UE1, UE2, UE3).

14. The base station according to claim 13, wherein the base station (11) is configured to perform the method according to any one of the claims 1-12.

## Patentansprüche

1. Verfahren zum Betreiben einer Basisstation in einem drahtlosen Funknetz, wobei die Basisstation (11) mehrere Antennen (12) zum Übertragen von Funkfrequenzsignalen zwischen der Basisstation (11) und einer Benutzereinrichtung (UE1, UE2, UE3) umfasst, wobei das Verfahren umfasst:
- Bereitstellen eines Übertragungsschlitzes (47) zum Empfangen eines Trainingssignals, welches von der Benutzereinrichtung (UE1, UE2, UE3) gesendet wurde, an jeder Antenne (12) einer Teilmenge der mehreren Antennen (12), wobei für jede Antenne (12) der Teilmenge ein entsprechender Konfigurationsparameter basierend auf dem Trainingssignal, welches an der entsprechenden Antenne (12) empfangen wurde, bestimmt wird, und wobei Nutzdateninformationsblöcke (36, 37), welche zwischen der Basisstation (11) und der Benutzereinrichtung (UE1, UE2, UE3) zu übertragen sind, unter Verwendung der bestimmten Konfigurationsparameter für die Antennen (12) übertragen werden,
- Bestimmen eines Verschlechterungsparameters, welcher eine Verschlechterung einer Übertragung zwischen der Basisstation (11) und der Benutzereinrichtung (UE1, UE2, UE3) aufgrund einer Änderung in der Übertragung anzeigt, welche eine Anpassung der Konfigurationsparameter erfordert, und
- Bestimmen eines Zeitparameters basierend auf dem Verschlechterungsparameter zum Steuern, wann ein weiterer Übertragungsschlitz (47) zum Empfangen eines nächsten Trainingssignals, welches von der Benutzereinrichtung (UE1, UE2, UE3) gesendet wird, an jeder Antenne (12) der Teilmenge der mehreren Antennen (12) bereitzustellen ist,
**gekennzeichnet durch** ein Bestimmen des Verschlechterungsparameters basierend auf einer Bestimmung einer relativen Bewegung zwischen der Basisstation (11) und der Benutzereinrichtung (UE1, UE2, UE3).

2. Verfahren nach Anspruch 1, wobei das Bestimmen des Verschlechterungsparameters ein Bestimmen einer räumlichen Information der Basisstation (11) umfasst.

3. Verfahren nach Anspruch 2, wobei das Bestimmen der räumlichen Information der Basisstation (11) mindestens eine aus einer Gruppe umfasst, welche besteht aus:
- Bestimmen eines Ortes der Basisstation (11),
- Bestimmen einer Geschwindigkeit, mit welcher sich die Basisstation (11) bewegt,
- Bestimmen einer Beschleunigung, mit welcher die Basisstation (11) beschleunigt wird, und
- Bestimmen einer Richtung einer Bewegung der Basisstation (11).

4. Verfahren nach Anspruch 3, wobei das Bestimmen des Ortes der Basisstation (11) mindestens eine aus einer Gruppe umfasst, welche besteht aus:
- Bestimmen einer stationären Position, welche für die Basisstation (11) definiert ist, und
- Bestimmen einer aktuellen Position der Basisstation (11).

5. Verfahren nach einem der vorhergehenden Ansprüche, wobei das Bestimmen des Verschlechterungsparameters ein Bestimmen einer räumlichen Information der Benutzereinrichtung (UE1, UE2, UE3) umfasst.

6. Verfahren nach Anspruch 5, wobei das Bestimmen der räumlichen Information der Benutzereinrichtung (UE1, UE2, UE3) mindestens eine aus einer Gruppe umfasst, welche besteht aus:
- Bestimmen eines Ortes der Benutzereinrichtung (UE1, UE2, UE3),
- Bestimmen einer Geschwindigkeit, mit welcher sich die Benutzereinrichtung (UE1, UE2, UE3) sich bewegt,
- Bestimmen einer Beschleunigung, mit welcher die Benutzereinrichtung (UE1, UE2, UE3) beschleunigt wird, und
- Bestimmen einer Richtung einer Bewegung der Benutzereinrichtung (UE1, UE2, UE3).

7. Verfahren nach Anspruch 6, wobei das Bestimmen des Ortes der Benutzereinrichtung (UE1, UE2, UE3) mindestens eine aus einer Gruppe umfasst, welche besteht aus:
- Bestimmen einer stationären Position, welche für die Benutzereinrichtung (UE1, UE2, UE3) definiert ist, und
- Bestimmen einer aktuellen Position der Benutzereinrichtung (UE1, UE2, UE3).

8. Verfahren nach einem der vorhergehenden Ansprüche, wobei das Bestimmen des Verschlechterungsparameters mindestens eine aus einer Gruppe umfasst, welche besteht aus:
- Bestimmen einer Bitfehlerrate einer Übertragung zwischen der Basisstation (11) und der Benutzereinrichtung (UE1, UE2, UE3) unter Verwendung der bestimmten Konfigurationsparameter für die Antennen (12),
- Bestimmen einer Rauschzahl einer Übertragung zwischen der Basisstation (11) und der Benutzereinrichtung (UE1, UE2, UE3) unter Verwendung der bestimmten Konfigurationsparameter für die Antennen (12),
- Bestimmen eines Signalpegels einer Übertragung zwischen der Basisstation (11) und der Benutzereinrichtung (UE1, UE2, UE3) unter Verwendung der bestimmten Konfigurationsparameter für die Antennen (12), und
- Bestimmen einer Änderung einer Fußabdruckmatrix der Benutzereinrichtung (UE1, UE2, UE3) in den bestimmten Konfigurationsparameter für die Antennen (12).

9. Verfahren nach einem der vorhergehenden Ansprüche, wobei das Bestimmen des Zeitparameters ein Bestimmen eines nächsten Zeitpunkts basierend auf dem Verschlechterungsparameter umfasst, zu welchem der weiteren Übertragungsschlitz zum Empfangen des nächsten Trainingssignals bereitzustellen ist.

10. Verfahren nach einem der vorhergehenden Ansprüche, wobei das Bestimmen des Zeitparameters ein Bestimmen eines Trainingsfolgenratenwertes basierend auf dem Verschlechterungsparameter umfasst, welcher eine Rate steuert, mit welcher weitere Übertragungsschlitze zum Empfangen nächster Trainingssignale, welche von der Benutzereinrichtung (UE1, UE2, UE3) gesendet werden, an jeder Antenne (12) der Teilmenge der mehreren Antennen (12) bereitzustellen sind.

11. Verfahren nach einem der vorhergehenden Ansprüche, wobei der Konfigurationsparameter mindestens einen aus einer Gruppe umfasst, welche besteht aus:
- einer Amplitudeninformation,
- einer Phaseninformation,
- einem Parameterpaar, welches eine Amplitudeninformation und einem zugeordnete Phaseninformation umfasst,
- mehreren der Parameterpaare, und
- einer Signalintensität.

12. Verfahren nach einem der vorhergehenden Ansprüche, wobei die mehreren Antennen (12) der Basisstation (11) zum Übertragen von Funkfrequenzsignalen zwischen der Basisstation (11) und mehreren Benutzereinrichtungen (UE1, UE2, UE3) ausgestaltet sind, wobei das Verfahren umfasst:
- Bereitstellen eines entsprechenden Übertragungsschlitzes (47) für jede Benutzereinrichtung (UE1, UE2, UE3) der mehreren Benutzereinrichtungen (UE1, UE2, UE3) zum Empfangen eines Trainingssignals, welches von der entsprechenden Benutzereinrichtung (UE1, UE2, UE3) gesendet wurde, an jeder Antenne (12) einer Teilmenge der mehreren Antennen (12), wobei für jede Antenne der Teilmenge ein entsprechender Konfigurationsparameter basierend auf dem Trainingssignal, welches an der entsprechenden Antennen (12) empfangen wird, bestimmt wird, und wobei Nutzdateninformationsblöcke (36, 37), welche zwischen der Basisstation (11) und der entsprechenden Benutzereinrichtung (UE1, UE2, UE3) zu übertragen sind, unter Verwendung der bestimmten entsprechenden Konfigurationsparameter für die Antennen (12) übertragen werden,
- Bestimmen eines entsprechenden Verschlechterungsparameters für jede Benutzereinrichtung (UE1, UE2, UE3), welcher eine Verschlechterung einer Übertragung zwischen der Basisstation (11) und der entsprechenden Benutzereinrichtung (UE1, UE2, UE3) aufgrund einer Änderung in der Übertragung anzeigt, welche eine Anpassung der Konfigurationsparameter erfordert, und
- Bestimmen eines entsprechenden Zeitparameters für jede Benutzereinrichtung (UE1, UE2, UE3) basierend auf dem entsprechenden Verschlechterungsparameter zum Steuern, wann ein weiterer Übertragungsschlitz (47) bereitzustellen ist, um an jeder Antenne (12) der Teilmenge der mehreren Antennen (12) ein nächstes Trainingssignal, welches von der entsprechenden Benutzereinrichtung (UE1, UE2, UE3) gesendet wird, zu empfangen.

13. Basisstation für ein drahtloses Funknetz, umfassend:
- mehreren Antennen (12) zum Übertragen von Funkfrequenzsignalen zwischen der Basisstation (11) und einer Benutzereinrichtung (UE1, UE2, UE3), und
- eine Verarbeitungsvorrichtung (14), welche ausgestaltet ist,
einen Übertragungsschlitzes (47) zum Empfangen eines Trainingssignals, welches von der Benutzereinrichtung (UE1, UE2, UE3) gesendet wird, an jeder Antenne (12) einer Teilmenge von den mehreren Antennen (12) bereitzustellen, wobei für jede Antenne (12) der Teilmenge ein entsprechender Konfigurationsparameter basierend auf dem Trainingssignal, welches an der entsprechenden Antennen (12) empfangen wurde, bestimmt wird, und wobei Nutzdateninformationsblöcke (36, 37), welche zwischen der Basisstation (11) und der Benutzereinrichtung (UE1, UE2, UE3) zu übertragen sind, unter Verwendung der für die Antennen (12) bestimmten Konfigurationsparameter übertragen werden,
einen Verschlechterungsparameter zu bestimmen, welcher eine Verschlechterung einer Übertragung zwischen der Basisstation (11) und der Benutzereinrichtung (UE1, UE2, UE3) aufgrund einer Änderung in der Übertragung anzeigt, welche eine Anpassung der Konfigurationsparameter erfordert, und
basierend auf dem Verschlechterungsparameter einen Zeitparameter zu bestimmen, zum Steuern, wann ein weiterer Übertragungsschlitz (47) zum Empfangen eines nächsten Trainingssignals, welches von der Benutzereinrichtung (UE1, UE2, UE3) gesendet wird, an jeder Antenne (12) der Teilmenge der mehreren Antennen (12) bereitzustellen ist,
**dadurch gekennzeichnet, dass** das Bestimmen des Verschlechterungsparameters auf einer Bestimmung einer relativen Bewegung zwischen der Basisstation (11) und der Benutzereinrichtung (UE1, UE2, UE3) basiert.

14. Basisstation nach Anspruch 13, wobei die Basisstation (11) ausgestaltet ist, das Verfahren nach einem der Ansprüche 1-12 auszuführen.

## Revendications

1. Procédé pour faire fonctionner une station de base dans un réseau de radio sans fil, la station de base (11) comprenant une pluralité d'antennes (12) pour transmettre des signaux à fréquence radio entre la station de base (11) et un équipement d'utilisateur (UE1, UE2, UE3), le procédé comprenant :
- la réalisation d'une encoche de transmission (47) pour la réception sur chaque antenne (12) d'un sous-jeu de la pluralité d'antennes (12) d'un signal d'apprentissage envoyé à partir de l'équipement d'utilisateur (UE1, UE2, UE3), et, pour chaque antenne (12) du sous-jeu, un paramètre de configuration correspondant étant déterminé en fonction du signal d'apprentissage reçu sur l'antenne correspondante (12), et des blocs d'information de charge utile (36, 37) devant être transmis entre la station de base (11) et l'équipement d'utilisateur (UE1, UE2, UE3) étant transmis à l'aide des paramètres de configuration déterminés pour les antennes (12),
- la détermination d'un paramètre de détérioration indiquant une détérioration d'une transmission entre la station de base (11) et l'équipement d'utilisateur (UE1, UE2, UE3) du fait d'un changement dans la transmission nécessitant une adaptation des paramètres de configuration, et
- la détermination, en fonction du paramètre de détérioration, d'un paramètre de minutage pour commander le moment où une autre encoche de transmission (47) doit être procurée pour la réception sur chaque antenne (12) du sous-jeu de la pluralité d'antennes (12) d'un signal d'apprentissage suivant envoyé à partir de l'équipement d'utilisateur (UE1, UE2, UE3),
**caractérisé en ce que** la détermination du paramètre de détérioration est basée sur une détermination d'un déplacement relatif entre la station de base (11) et l'équipement d'utilisateur (UE1, UE2, UE3).

2. Procédé selon la revendication 1, dans lequel la détermination du paramètre de détérioration comprend la détermination d'une information spatiale de la station de base (11).

3. Procédé selon la revendication 2, dans lequel la détermination de l'information spatiale de la station de base (11) comprend au moins l'une parmi un groupe comprenant :
- la détermination d'un emplacement de la station de base (11),
- la détermination d'une vitesse à laquelle la station de base (11) se déplace,
- la détermination d'une accélération à laquelle la station de base (11) accélère, et
- la détermination d'une direction d'un déplacement de la station de base (11).

4. Procédé selon la revendication 3, dans lequel la détermination de l'emplacement de la station de base (11) comprend au moins l'une parmi un groupe comprenant :
- la détermination d'une position stationnaire définie pour la station de base (11), et
- la détermination d'une position actuelle de la station de base (11).

5. Procédé selon l'une quelconque des revendications précédentes, dans lequel la détermination du paramètre de détermination comprend la détermination d'une information spatiale de l'équipement d'utilisateur (UE1, UE2, UE3).

6. Procédé selon la revendication 5, dans lequel la détermination de l'information spatiale de l'équipement d'utilisateur (UE1, UE2, UE3) comprend au moins l'une parmi un groupe comprenant :
- la détermination d'un emplacement de l'équipement d'utilisateur (UE1, UE2, UE3),
- la détermination d'une vitesse à laquelle l'équipement d'utilisateur (UE1, UE2, UE3) se déplace,
- la détermination d'une accélération à laquelle l'équipement d'utilisateur (UE1, UE2, UE3) accélère, et
- la détermination d'une direction d'un déplacement de l'équipement d'utilisateur (UE1, UE2, UE3).

7. Procédé selon la revendication 6, dans lequel la détermination de l'emplacement de l'équipement d'utilisateur (UE1, UE2, UE3) comprend au moins l'une parmi un groupe comprenant :
- la détermination d'une position stationnaire définie pour l'équipement d'utilisateur (UE1, UE2, UE3), et
- la détermination d'une position actuelle de l'équipement d'utilisateur (UE1, UE2, UE3).

8. Procédé selon l'une quelconque des revendications précédentes, dans lequel la détermination du paramètre de détérioration comprend au moins l'une parmi un groupe comprenant :
- la détermination d'un taux d'erreurs de bits d'une transmission entre la station de base (11) et l'équipement d'utilisateur (UE1, UE2, UE3) à l'aide des paramètres de configuration déterminés pour les antennes (12),
- la détermination d'une valeur de bruit dans une transmission entre la station de base (11) et l'équipement d'utilisateur (UE1, UE2, UE3) à l'aide des paramètres de configuration déterminés pour les antennes (12),
- la détermination d'un niveau de signal d'une transmission entre la station de base (11) et l'équipement d'utilisateur (UE1, UE2, UE3) à l'aide des paramètres de configuration déterminés pour les antennes (12), et
- la détermination d'un changement dans une matrice d'empreinte de l'équipement d'utilisateur (UE1, UE2, UE3) dans les paramètres de configurations déterminés pour les antennes (12).

9. Procédé selon l'une quelconque des revendications précédentes, dans lequel la détermination du paramètre de minutage comprend la détermination, en fonction du paramètre de détérioration, d'un point suivant dans le temps où l'encoche de transmission suivante pour la réception du signal d'apprentissage suivant doit être disposée.

10. Procédé selon l'une quelconque des revendications précédentes, dans lequel la détermination du paramètre de minutage comprend la détermination, en fonction du paramètre de détérioration, d'une valeur de fréquence de séquences d'apprentissage commandant une fréquence à laquelle d'autres encoches de transmission doivent être réalisées pour la réception sur chaque antenne (12) du sous-jeu de la pluralité d'antennes (12) de signaux d'apprentissage suivants envoyés à partir de l'équipement d'utilisateur (UE1, UE2, UE3).

11. Procédé selon l'une quelconque des revendications précédentes, dans lequel le paramètre de configuration comprend au moins l'une parmi un groupe comprenant :
- une information d'amplitude,
- une information de phase,
- une paire de paramètres comprenant une information d'amplitude et une information de phase associée,
- une pluralité des paires de paramètres, et
- une intensité de signal.

12. Procédé selon l'une quelconque des revendications précédentes, dans lequel la pluralité d'antennes (12) de la station de base (11) sont configurées de façon à transmettre des signaux à fréquence radio entre la station de base (11) et une pluralité d'équipements d'utilisateur (UE1, UE2, UE3), le procédé comprenant :
- la réalisation, pour chaque équipement d'utilisateur (UE1, UE2, UE3) de la pluralité d'équipements d'utilisateur (UE1, UE2, UE3), d'une encoche de transmission correspondante (47) pour la réception sur chaque antenne (12) d'un sous-jeu de la pluralité d'antennes (12) d'un signal d'apprentissage envoyé à partir de l'équipement d'utilisateur correspondant (UE1, UE2, UE3), et, pour chaque antenne (12) du sous-jeu, un paramètre de configuration correspondant étant déterminé en fonction du signal d'apprentissage reçu sur l'antenne correspondante (12), et des blocs d'information de charge utile (36, 37) devant être transmis entre la station de base (11) et l'équipement d'utilisateur correspondant (UE1, UE2, UE3) étant transmis à l'aide des paramètres de configuration correspondants déterminés pour les antennes (12),
- la détermination, pour chaque équipement d'utilisateur (UE1, UE2, UE3), d'un paramètre de détérioration correspondant indiquant une détérioration d'une transmission entre la station de base (11) et l'équipement d'utilisateur correspondant (UE1, UE2, UE3) du fait d'un changement dans la transmission nécessitant une adaptation des paramètres de configuration, et
- la détermination, pour chaque équipement d'utilisateur (UE1, UE2, UE3), en fonction du paramètre de détérioration correspondant, d'un paramètre de minutage correspondant pour commander le moment où une autre encoche de transmission (47) doit être procurée pour la réception sur chaque antenne (12) du sous-jeu de la pluralité d'antennes (12) d'un signal d'apprentissage suivant envoyé à partir de l'équipement d'utilisateur correspondant (UE1, UE2, UE3).

13. Station de base pour un réseau de radio sans fil, comprenant :
- une pluralité d'antennes (12) pour transmettre des signaux à fréquence radio entre la station de base (11) et un équipement d'utilisateur (UE1, UE2, UE3), et
- un dispositif de traitement (14) configuré de façon à :
réaliser une encoche de transmission (47) pour la réception sur chaque antenne (12) d'un sous-jeu de la pluralité d'antennes (12) d'un signal d'apprentissage envoyé à partir de l'équipement d'utilisateur (UE1, UE2, UE3), et, pour chaque antenne (12) du sous-jeu, un paramètre de configuration correspondant étant déterminé en fonction du signal d'apprentissage reçu sur l'antenne correspondante (12), et des blocs d'information de charge utile (36, 37) devant être transmis entre la station de base (11) et l'équipement d'utilisateur (UE1, UE2, UE3) étant transmis à l'aide des paramètres de configuration déterminés pour les antennes (12),
déterminer un paramètre de détérioration indiquant une détérioration d'une transmission entre la station de base (11) et l'équipement d'utilisateur (UE1, UE2, UE3) du fait d'un changement dans la transmission nécessitant une adaptation des paramètres de configuration, et
déterminer, en fonction du paramètre de détérioration, un paramètre de minutage pour commander le moment où une autre encoche de transmission (47) doit être procurée pour la réception sur chaque antenne (12) du sous-jeu de la pluralité d'antennes (12) d'un signal d'apprentissage suivant envoyé à partir de l'équipement d'utilisateur (UE1, UE2, UE3),
**caractérisée en ce que** la détermination du paramètre de détérioration est basée sur une détermination d'un déplacement relatif entre la station de base (11) et l'équipement d'utilisateur (UE1, UE2, UE3)

14. Station de base selon la revendication 13, dans laquelle la station de base (11) est configurée de façon à exécuter le procédé selon l'une quelconque des revendications 1 à 12.
